# EUROPEAN PATENT SPECIFICATION

(11) **EP 0 334 117 B1**
(45) Date of publication and mention of the grant of the patent: **19.01.1994**
(21) Application number: 89104214.5
(22) Date of filing: 09.03.1989
(51) Int. Cl.: B62B 9/00

(54) **Safety attachment for reversible baby seats or for baby carriers**
Sicherheitsbefestigung für umkehrbare Kindersitze und für Kinderwagen
Fixation de sécurité pour sièges de bébé utilisables dans deux sens pour voitures d'enfant

(30) Priority: 17.03.1988 IT 8553788
(43) Date of publication of application: 27.09.1989
(73) Proprietor: L'INGLESINA BABY S.P.A., I-36077 Altavilla Vincentina (Vincenza) (IT)
(72) Inventor: Tomasi, Liviano, I-36050 Sovizzo (Vicenza) (IT)
(74) Representative: Bonini, Ercole

(56) References cited:
- DE-U- 8 522 705
- FR-A- 2 041 998
- FR-A- 2 407 111
- US-A- 3 029 087

## Description

The invention concerns a special safety attachment, particularly suited for use on reversible seats or on those baby carriers, which are detachably connected with the frame of a baby carriage or with wheelless supporting stands, such as baby high chairs or similar.

Most baby carriages or baby strollers which are currently on the market comprise a frame made of composite tubular iron provided and with wheels, which are usually independent from each other, said frame being usually suited to support indiscriminately a baby carrier, a baby-seat or a baby stroller. Both in the case of the baby carrier and of the seat or stroller, said elements can be positioned on the frame in either direction in relation to the handle used for pushing the baby carriage or the stroller.

In order to change from baby carriage to stroller and also in order to change the orientation of both the baby carriage and the stroller according to the different needs, the supporting frame of the baby carriage or the stroller has the two supporting rods of the frame with two slots, having the purpose of receiving a corresponding number of pivots which are part of the carrier or of the stroller structure to be hooked on the supporting frame.

For simplicity sake, from now on, the word baby carrier will be used indifferently to indicate both the baby carrier or the reversible seat to be applied on a supporting frame with or without wheels.

In order to make the connection between the baby carrier and the supporting frame easier,the formerly mentioned slots are built so as to guarantee a quick latching but also so as to make the unlatching easy, in order not to complicate the operation, particularly for people who are not necessarily expert in mechanical matters. The DE-G8522705 discloses a baby carriage provided with a locking device consisting of a bar having slots which engage with the pivots of the detachable baby carriage. A longitudinal movement of the bar engages or releases the bed to the chassis. Also the US 3.029,087 discloses a baby carriage provided with locking pegs in the carriage bed and with locking peg retaining plates with recesses adapted to receive the locking peg. The retaining plates can be moved from a locked position to an unlocked position. In all the devices disclosed in the cited prior art there is a position in which the bed of the baby carriage can be detached from the chassis with only one movement. In most frames of baby carriers present in the market there are two supporting rods, which receive and latch on to the carrier, are provided on one side with an L-shaped slot and on the other with a V-shaped slot, so that the insertion within the L-shaped slot is obtained with two movements, i.e. first with a downward vertical movement, and then with a horizontal one, while the insertion of the second pivot occurs by rotating directly around the fulcrum of the first pivot, which is already secured within the L-shaped slot.

Then, in order to grant a rigid connection between the baby carrier and the frame, without any danger of accidental unlatching, most baby carriers are provided with latches which slide along the supporting rods of the frame and shut the V-shaped slot, thereby preventing the pivot contained therein from slipping out. For this reason the separation of one part from the other, i.e. of the baby carrier from its supporting frame, is obtained by first moving the securing latch, so as to free the V-shaped slot.

This safety system has shown some rather critical limitations particularly when used on the so called reversible baby carriers or baby seats, which can be oriented indifferently in the forward or backward direction in relation to the longitudinal direction of the frame.

In fact, it often occurs that the center of gravity of the weight of the infant in the baby carrier or in the stroller, particularly in the case of collapsible strollers, which are opened in the horizontal position, falls outside of the vertical lines passing through the pivots resting between the baby carrier and the supporting frame and it may happen, specifically, that the resultant of said center of gravity falls on the side of the L-shaped slot. In this case, once the safety latch has been unlatched, nothing prevents the seat resting on the frame from turning over, and that because a turning over torque is created having its force in the infant weight and its arm in the distance between the center of gravity and the vertical passing through the fulcrum of rotation. Nothing happens, on the other hand, if the resultant of the center of gravity, althrough falling outside of the vertical lines passing through the pivots supporting the seat, falls outside but close to the open V-shaped slot; in fact, in this case the turning-over pair which is created has its fulcrum in the pivot within the V-shaped slot and, as a consequence, the other pivot encircled by the L-shaped slot is prevented from slipping out of its seat because of the geometrical shape of the slot.

In can be understood that in the just described case the safety of the baby carriage is critical, since the person performing the unlatching of the baby carrier from the frame must be quick in grasping the baby carrier with both hands, so as to prevent the turning over mentioned above.

The main purpose of the present invention is to eliminate the above-mentioned inconvenience.

The purpose is in fact that of obtaining a safety latch suited to be latched on the supporting frame of a baby carrier or on the supporting structure of a high chair, and made so that the turning over of the baby carrier resting on it is always prevented regardless of the distribution of the weights supported by the frame.

Another purpose of the invention is to obtain the utmost safety in the attachment between the frame and the baby carrier, without complicating the operations to be performed on the latch and operations to latch and unlatch the baby carriage on and from the supporting frame.

Yet another purpose of the invention is to obtain an economically priced, easy-to-assemble latch which is also easy to use on the part of the person who has to operate it.

All the above-listed purposes and others which will be better explained hereafter, are reached by a safety latch, particularly suited to be applied on reversible baby seats or baby carriers which are detachably mounted on a frame with wheels, the main features of which are, in accordace with the main claim of the present invention. Characteristics and details of the invention will be better understood from the description of a preferred form of execution, which is given by way of example only, but is not meant to limit its scope and which is illustrated in the enclosed tables of drawing, wherein:
- Fig. 1 shows a view of a baby carriage provided with the safety latch of the invention;
- Fig. 2 shows the rod of the suporting frame which receives the safety latch of the invention;
- Fig. 3 shows a view of the safety connecting latch of the invention mounted on the rod of the supporting frame;
- Fig. 4 is a view of the safety connecting latch closed on the frame, so as to prevent any movement between the supporting frame and the mounted baby carrier;
- Fig. 5 shows the safety connecting latch, open so as to allow the removal of the baby carrier supported by the frame.

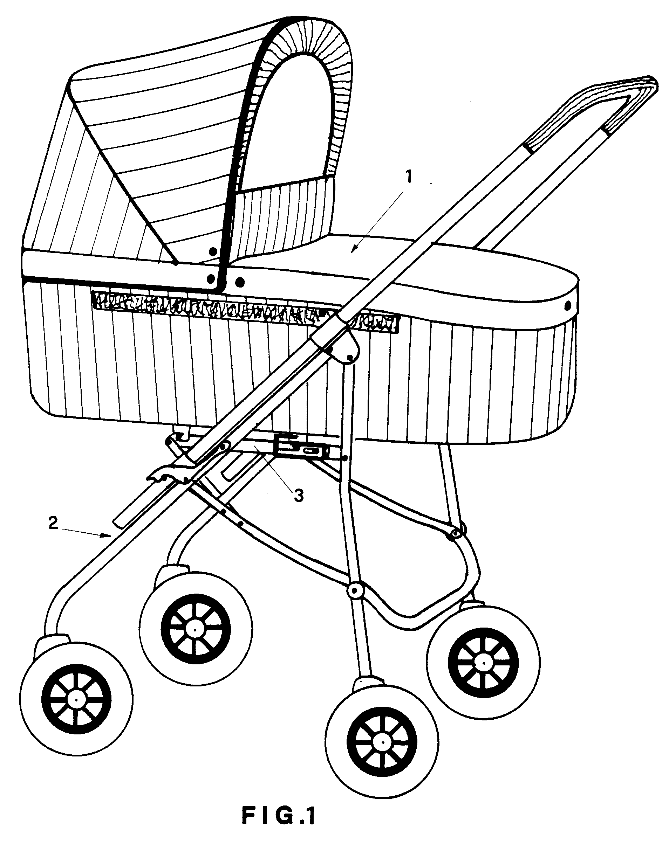

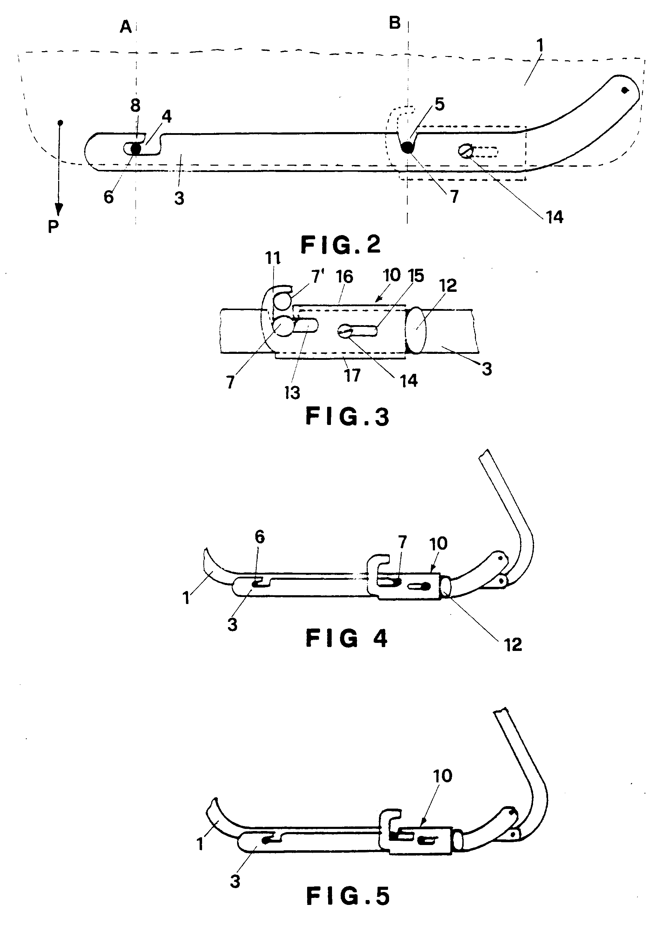

With reference to the mentioned figures, it can be observed in Fig. 1 that the represented baby carriage consists of a baby carrier, indicated with 1, which rests on a supporting frame, indicated as a whole with 2, made of interconnected steel rods and complete with wheels. The connection between the baby carrier 1 and the supporting frame 2 is obtained by inserting the pivots, belonging to the structure of the baby carrier 1, within two horizontal rods 3, one of which is visible in fig. 1 and is represented more clearly in Fig. 2.

As can be observed in Fig. 2, the horizontal rod 3, which is part of the supporting frame 2 of the baby carriage presents a L-shaped slot 4 and a V-shaped slot 5. Slot 4 lodges pivot 6 of the baby carriage 1 and slot 5 lodges pivot 7. If we mark with A and B respectively the vertical lines passing through the pivots 6 and 7 respectively, we can make the following remarks: when the resultant of the weight force P falls outside of the space existing between the vertical lines A and B and, in particular, said resultant P falls on the side of the vertical line A, a turning-over pair results, which has the weight-force P as its component and the distance between the action line of the weight force P and the vertical line A as its arm, since pivot 6 functions as the turning-over fulcrum of baby carrier 1.

This turning over would not be prevented if the safety attachment, which will be described hereafter, was not present, since pivot 7 is lodged in the V-shaped slot 5 and it is free to exit from its seat; as a consequence, the baby carrier could rotate around pivot 6 and turn over.

Obviously, nothing happens if the weight P, falling outside the space comprised between the vertical lines A and B is on the side of line B; in fact, in this case the fulcrum is pivot 7, and pivot 6 is prevented from coming out of slot 4 by the projection 8 which is present in said slot.

Thanks to the presence of the safety connecting latch, which is indicated as a whole with 10 in Fig.3, it can be observed that in the worst condition, namely in the condition in which weight P falls outside the vertical lines A and B on the side of line A, pivot 7, which would have a tendency to exit, is actually kept in position 7' by tooth 11 which presents latch 10.

Obviously, in order to disconnect the baby carrier 1 from rod 3 of the supporting frame it is necessary first to lift the baby carrier 1 upwards and then to perform a horizontal displacement, so as to free pivot 7 from the securing action of tooth 11 when the latch is in the opening position as shown in Fig.5.

Latch 10 is pushed into its closed position through lever 12 which is set in the position shown in Fig. 4, so that pivot 7 of the baby carrier 1 positions itself within groove 13 and is thereby prevented from moving.

The connection between the safety latch 10 and rod 3 of the supporting frame is obtained by means of bolt 14 attached to the rod of the supporting frame, and sliding within slot 15 of the safety latch. Moreover the safety latch 10 presents two edges 16 and 17 which are bent in the lengthwise direction on rod 3.

Fig. 4 shows the safety latch 10 in its closed position around the pivots 6 and 7 in rod 3. Fig. 5 shows the safety latch 10 in its open position, so as to allow the removal of the baby carrier 1, after it has been lifted upwards and then translated horizontally, to the right in the case shown in Fig. 5.

It can be understood from the foregoing description that all the proposed purposes have been reached by the present invention.

In particular, the main purpose of granting a secure attachment between the baby carrier and its supporting frame has been reached, since their unlatching is not possible unless there is an absolutely volontary action and it can not occur because of chance or of an oversight on the part of the operator. In fact, after the latch has been opened, in order to perform the removal of the baby carrier from the supporting frame two movements are required, i.e. a vertical and a horizontal one or a rotation and a subsequent translation. It is important to underline that this maneuver can be performed without operating on the latch, since the safety connecting latch presents no return spring and for this reason the operator can maneuver without any hindrance. Apart for this characteristic, it will be pointed out again that the baby seat or baby carrier resting on the supporting frame provided with the connecting safety latch according to the invention are in any case held in place by tooth 11 of the safety latch.

During the manufacturing phase some variations will occur to those who are experts in this branch. Said variations will however belong to the scope of the patent protection, such as it is specified in the following claims.

## Claims

1. A baby seat or baby carrier detachably connected with a supporting frame by a safety attachment for instance a reversible baby carrier on a frame with wheels, said frame having two horizontal rods (3) each one provided with two upwardly-opening slots (4, 5), one of which is V-shaped, for receiving corresponding pivots (6, 7) belonging to the baby seat (1), in which the safety attachment comprises at least one latch (10) connected with a horizontal rod (3) of the supporting frame, and movable longitudinally along the rod within the limits of a slot (15) belonging to said latch by virtue of engagement between the slot and a part (14) fixed to the rod, said latch presenting a closed horizontal groove (13) opening upwardly at one end and cooperating with the pivot (7) inserted into the V-shaped slot (5), wherein the horizontal groove (13) locks the baby seat (1) to the frame when the pivot (7) is inserted in the V-shaped slot and the latch slid to the locking position, in which the V-shaped slot is closed with the pivot lying in the closed part of the groove and the seat is removable from the frame when the latch is slid to an opening position in which the V-shaped slot aligns with the said upwardly-opening end of the groove, characterized in that the other slot is L-shaped and that there is provided a tooth (11) presenting an essentially vertical development of the said open end of the groove with a tip extending parallel to and above the open end of the groove (13), such that the tip of the tooth (11) limits the vertical movement of the pivot (7) when the latch (10) is in opening position leaving open the V-shaped slot of the rod (3), thereby preventing the disconnection of the baby seat from the frame without a vertical and a following translation movement of the V-slot pivot.

2. A baby seat according to claim 1, characterized in that the latch (10) is slidably connected to the rod (3) of the baby carrier (2) by mean of a bolt (14) and of two opposite edges (16,17) bent in the lengthwise direction on the rod (3).

## Patentansprüche

1. Kindersitz oder Kinderträger, der abschaltbar mit einem Stützrahmen durch eine Sicherheitsfassung verbunden ist, z.B, ein reversibler Kinderträger auf einem Rahmen mit Rädern montiert, wobei der genannte Rahmen zwei waagerechte Stangen (3) aufweist, die je mit einem aufwarts geöffneten Langloch (4, 5) vorgesehen sind, wobei ein davon eine V-Form aufweist, und zum Empfang von entsprechenden Zapfen (6, 7) geeignet sind, die zum Kindersitz (1) gehören, worin die Sicherheitsfassung mindestens eine Fangklinke (10) einschliesst, die mit der waagerechten Stange (3) des Stützrahmens verbunden ist und waagerecht entlang der Stange innerhalb der Grenzen des Langlochs (15) beweglich ist, wobei das Langloch der genannten Fangklinke gehört, dank der Verbindung zwischen dem Langloch und einem an der Stange befestigten Teil (14), wobei die genannte Fangklinke eine geschlossene Waagerechte Rille (13) aufweist, die am einen Ende aufwärts geöffnet ist und mit dem im V-förmigen Langloch (5) eingeführten Zapfen (7) zusammenwirkt, wobei die waagerechte Rille (13) den Kindersitz (1) zum Rahmen befestigt, wenn der Zapfen sich im V-förmigen Langloch befindet und die Fangklinke in die Befestigungslage gleitet, worin das V-förmige Langloch geschlossen ist und der Zapfen sich im geschlossenen Teil der Rille befindet, und der Sitz dann vom Rahmen entfernt werden kann, wenn die Fangklinke zu einer Öffnungslage gleitet, indem das V-förmige Langloch mit dem genannten, aufwärts geöffneten Ende der Rille fluchtet, dadurch gekennzeichnet, dass das andere Langloch eine L-Form aufweist und dass ein Zahn (11) vorhanden ist, der eine im wesentlichen senkrechte Entwicklung des genannten geöffneten Ende der Rille mit einer Spitze aufweist, die sich parallel zum geöffneten Ende der Rille (13) und oberhalb der selben erstreckt, damit die Spitze des Zahns (11) die senkrechte Bewegung des Zapfens (7) begrenzt, wenn die Fangklinke (10) sich in der Öffnungslage befindet und das V-förmige Langloch der Stange (3) offen lässt, wodurch die Auseinandersetzung des Kindersitzes vom Rahmen ohne eine senkrechte Bewegung und eine danachfolgende Verschiebung nicht möglich ist.

2. Kindersitz nach Anspruch 1, dadurch gekennzeichnet, dass die Fangklinke (10) gleitend mit der Stange (3) des Kinderträger (2) mittels eines Bolzens (14) und zwei gegenüberliegenden, entlang der Länge der Stange gebogenen Ränder (16, 17) verbunden ist.

## Revendications

1. Siège pour enfant ou porte-enfant connecté de façon amovible avec un châssis de support par une attache de sécurité, par exemple, un porte-enfant réversible sur un châssis à roues, le dit châssis ayant deux tiges horizontales (3), chacune d'elles étant pourvue de deux fentes s'ouvrant (4, 5) vers l'haut, l'une d'elles ayant la forme d'une V, aptes à recevoir les pivots correspondants (6, 7) appartenant au siège pour enfant (1), où l'attache de sécurité comprend au moins un verrou (10) connecté à la tige (3) horizontale du châssis de support, et mobile longitudinalement le long de la tige entre les limites de la fente (15) appartenant au dit verrou en vertue de l'engagement entre la fente et une partie (14) attachée à la tige, le dit verrou présentant une cannelure horizontale fermée (13) s'ouvrant vers l'haut à une extrémité et coopérant avec le pivot (7) inséré dans la fente en V (5), où la cannelure horizontale (13) bloque le siège d'enfant (1) au châssis quand le pivot (7) est inséré dans la fente en V et le verrou glisse dans sa position de blocage, dans laquelle la fente en V est fermé avec le pivot se trouvant dans la partie fermée de la cannelure et le siège est démontable du châssis quand le verrou glisse dans la position d'ouverture dans laquelle la fente en V s'aligne avec la dite extrémité ouverte vers l'haut de la cannelure, caractérisé en ce que l'autre fente a une forme en L et qu'elle est pourvue d'un dent (1) présentant un développement essentiellement vertical de la dite extrémité ouverte de la cannelure avec une pointe s'extendant parallèle à l'extrémité ouverte de la cannelure (13) et au dessus de la même, de façon que la pointe du dent (11) limite le mouvement vertical du pivot (7), quand le verrou (10) est dans la position d'ouverture laissant ouverte la fente en V de la tige (3), en empêchant ainsi que le siège soit disconnecté du châssis sans un mouvement vertical suivi par un mouvement de translation du pivot de la fente en V.

2. Siège pour enfant selon la revendication 1, caractérisé en ce que le verrou (10) est connecté avec la tige (3) du porte-enfant (2) de façon qu'il peut y glisser, par le moyen d'un boulon (14) et de deux bords opposés (16, 17) courbés le long de la longueur de la tige (3).
